# EUROPÄISCHE PATENTSCHRIFT

(11) **EP 4 410 685 B1**
(45) Veröffentlichungstag und Bekanntmachung des Hinweises auf die Patenterteilung: **25.03.2026**
(21) Anmeldenummer: 24154485.7
(22) Anmeldetag: 29.01.2024
(51) Int. Cl.: B64U 10/80, G03B 37/00, B64U 101/70, B64U 101/30, B64U 20/87, B64U 30/21, F16L 55/32, F16L 55/48

(54) **KANALINSPEKTIONSSYSTEM**
CHANNEL INSPECTION SYSTEM
SYSTÈME D'INSPECTION DE CANAL

(30) Priorität: 03.02.2023 DE 102023200899
(43) Veröffentlichungstag der Anmeldung: 07.08.2024
(73) Patentinhaber: IBAK Helmut Hunger GmbH & Co. KG, 24148 Kiel (DE)
(72) Erfinder: Böttcher, Marcus, 24148 Kiel (DE); Dannenberg, Jonathan, 24148 Kiel (DE)
(74) Vertreter: Patentanwälte Hemmer Lindfeld Frese Partnerschaft mbB

(56) Entgegenhaltungen:
- CN-B- 113 212 732
- DE-A1- 102017 108 053
- KR-A- 20200 067 286
- US-A1- 2019 009 924

## Beschreibung

Die Erfindung betrifft ein Kanalinspektionssystem mit zumindest einem flugfähigen Inspektionsgerät.

Kanalinspektionssysteme werden genutzt, um Kanalbauwerke wie z.B. Kanalrohe oder Schächte zu inspizieren, Beschädigungen festzustellen und gegebenenfalls Bearbeitungen im Kanalbauwerk durchzuführen. Hierzu sind fahrbare Systeme bekannt, welche als angetriebener Fahrwagen durch das Kanalrohr fahren. Ferner sind Systeme bekannt, bei welchen eine Sonde, das heißt ein Inspektionsgerät mit Hilfe eines Schiebestabs im Kanalrohr vorgeschoben wird. Zwischenzeitlich gibt es auch Entwicklungen mit flugfähigen Inspektionsgeräten, welche nach Art einer Drohne durch das Kanalrohr fliegen. CN 113 212 732 B offenbart ein flugfähiges Inspektionsgerät in Form einer Drohne, welche mehrere Kameras aufweist, zum einen eine Kamera an der Vorderseite, zum anderen eine Kamera an einem rotierenden Rad, welche radial zur Flugrichtung gerichtet ist und deren Blickrichtung mit dem Rad um eine der Flugrichtung entsprechende Längsachse rotiert. So wird ein 360°-Scan der Umgebung durchgeführt, während die Drohne sich in Flugrichtung bewegt. Bei gleichzeitiger Vorwärtsbewegung wird somit ein spiralförmiges Bild aufgenommen. Nachteilig ist, dass eine Vielzahl von Bildern aufgenommen werden muss und darüber hinaus die rotierende Anordnung der Kamera einen komplizierten Aufbau der Drohne bewirkt.

Es ist Aufgabe der Erfindung, ein Kanalinspektionssystem mit zumindest einem flugfähigen Inspektionsgerät dahingehend weiterzuentwickeln, dass auf eine einfache Weise ein vollständiges Bildmodell eines Kanalbauwerkes erstellt werden kann.

Diese Aufgabe wird gelöst durch ein Kanalinspektionssystem mit den in Anspruch 1 angegebenen Merkmalen. Bevorzugte Ausführungsformen ergeben sich aus den Unteransprüchen, der nachfolgenden Beschreibung sowie den beigefügten Figuren.

Das erfindungsgemäße Kanalinspektionssystem weist zumindest ein flugfähiges Inspektionsgerät auf. Dieses ist dafür vorgesehen, durch ein Kanalbauwerk wie z.B. ein Kanalrohr und/oder einen Schacht zu deren Inspektion zu fliegen. Das zumindest eine Inspektionsgerät weist zumindest zwei Kameras und eine Steuereinrichtung auf. Die beiden Kameras dienen dazu, Bilder im Kanalbauwerk, z.B. in dem Kanalrohr bzw. in dem Schacht, beim Durchfliegen zu erfassen. Die Steuereinrichtung ist insbesondere ausgebildet, die Kameras entsprechend zu steuern, dass zu gewünschten Zeitpunkten von den Kameras Bilder aufgenommen werden. Dabei werden die Kameras vorzugsweise von der Steuereinrichtung so angesteuert, dass zu gewünschten Zeitpunkten Einzelbilder aufgenommen werden. Alternativ oder zusätzlich wäre es auch denkbar, die Kameras so anzusteuern, dass Videofilme aufgenommen werden. Ferner kann die Steuereinrichtung dazu ausgebildet sein, auch den Flug des Inspektionsgerätes zu steuern, sodass dieses vorzugsweise autonom durch ein Kanalbauwerk wie z.B. ein Kanalrohr oder einen Schacht fliegen kann. Dabei kann die Steuereinrichtung insbesondere mit Sensoren zusammenwirken, um das Inspektionsgerät auf einer gewünschten Flugbahn zu führen.

Das Kanalinspektionssystem weist darüber hinaus eine Bildverarbeitungseinrichtung auf, welche ganz oder teilweise in das Inspektionsgerät integriert sein kann oder auch ganz oder teilweise extern zu dem Inspektionsgerät ausgebildet sein kann Die Bildverarbeitungseinrichtung kann beispielsweise als eine Softwareapplikation ausgebildet sein, welche auf einem Computersystem ausgeführt wird. Die Bildverarbeitungseinrichtung ist dazu ausgebildet, die von der Kamera aufgenommenen Einzelbilder oder Videos weiter zu verarbeiten.

Die Kameras und die Steuereinrichtung des Inspektionsgerätes sind erfindungsgemäß zum Erzeugen von 360° Bildern ausgebildet. Dies erfolgt erfindungsgemäß in der Weise, dass von den Kameras Bilder in einer ersten Blickrichtung und Bilder in zumindest einer zweiten Blickrichtung aufgenommen werden. Dies sind voneinander abgewandte Blickrichtungen, sodass die Blickrichtungen gemeinsam einen 360° Blickwinkel erreichen. Die Bildverarbeitungseinrichtung ist derart ausgebildet, dass sie die in dem zumindest zwei Blickrichtungen aufgenommenen Bilder in einer 3D-Rekonstruktion zu einem 3D-Bildmodell zusammenfügt, wobei ein dreidimensionales Modell der von den Kameras aufgenommenen Umgebung erzeugt wird. Dies kann in der Weise erfolgen, dass zunächst für beide Blickrichtungen unabhängig 3D Rekonstruktionen erfolgen und die so erzeugten 3D-Modelle im Anschluss anhand korrespondierender Bildpunkte in ein einheitliches Koordinatensystem und damit ein einheitliches 3D-Modell überführt werden. Dieses 3D-Bildmodell bzw. 3D-Modell ermöglicht es dann, das gesamte Kanalbauwerk im Anschluss in allen gewünschten Blickrichtungen virtuell betrachten zu können. Erfindungsgemäß werden somit nicht nur Bilder in einer Blickrichtung aufgenommen, sondern in zumindest zwei Blickrichtungen, welche so gelegen sind, dass sie gemeinsam ein 360°-Ansicht bzw. eine Rundumansicht realisieren, welche dann in der 3D-Rekonstruktion aus den Einzelbildern zusammengesetzt wird. Dies ermöglicht eine sehr schnelle vollständige Betrachtung des gesamten Kanalbauwerkes, da das flugfähige Inspektionsgerät sehr schnell durch das Kanalbauwerk wie z.B. ein Kanalrohr oder einen Schacht fliegen kann und eine entsprechende Anzahl von Bildern, welche erforderlich ist, um ein 3D-Bildmodell zu erstellen, aufnehmen kann. Im Anschluss können dann beliebige Stellen des Kanalbauwerkes in dem 3D-Bildmodell näher betrachtet oder untersucht werden.

Erfindungsgemäß erfolgt in der 3D-Rekonstruktion unter Verwendung eines bekannten 3D-Rekonstruktionsverfahrens eine tatsächliche dreidimensionale Rekonstruktion des in den Bildern von der zumindest einen Kamera aufgenommen Raumes bzw. aufgenommen Raumkontur. In einem Kanalbauwerk kann so die tatsächliche dreidimensionale Gestalt der Kanalwandung in dem Modell rekonstruiert werden, ohne eine bekannte Rohr- bzw. Kanalgeometrie zugrunde zu legen zu müssen. D.h. erfindungsgemäß werden beispielsweise nicht lediglich Bilder auf eine idealisierte Rohrgeometrie in Form eines Zylinders projiziert.

Die beschriebene Bildverarbeitung in der Bildverarbeitungseinrichtung kann unmittelbar nach Aufnahme der Bilder, quasi in Echtzeit erfolgen. Alternativ können zuerst alle aufgenommenen Bilder gespeichert werden und die erforderliche Bildverarbeitung kann erfolgen, nachdem alle erforderlichen Bilder aufgenommen worden sind, beispielsweise nachdem ein Speicher in dem Inspektionsgerät, in welchem die aufgenommenen Bilder gespeichert sind, ausgelesen worden ist.

Das zumindest eine flugfähige Inspektionsgerät weist zumindest eine Auftriebseinrichtung und zumindest eine Vortriebseinrichtung auf. Die Auftriebseinrichtung dient dazu, das Inspektionsgerät schweben zu lassen, während die Vortriebseinrichtung dazu dient, das Inspektionsgerät vorwärts, sowie gegebenenfalls rückwärts und/oder seitwärts zu bewegen. Zumindest die Vortriebseinrichtung ist bevorzugt als zumindest ein Rotor ausgebildet. Ein solcher Rotor kann, wie von Drohnen, Hubschraubern und/oder Flugzeugen bekannt, Vortrieb erzeugen. Als Auftriebseinrichtung können ebenfalls Rotoren zum Einsatz kommen, wie es von Hubschraubern oder Drohnen her bekannt ist. Alternativ oder zusätzlich können aber auch Auftriebseinrichtungen anderer Art zum Einsatz kommen, beispielsweise aerostatisch wirkende Auftriebsmittel, wie Auftrieb erzeugende Gasfüllungen nach Art eines Luftschiffes.

Gemäß einer bevorzugten Ausführungsform der Erfindung weist das zumindest eine flugfähige Inspektionsgerät zumindest eine als Rotor ausgebildete kombinierte Auf- und Vortriebseinrichtung auf. Dies kann ein Rotor nach Art eines Hubschraubers sein oder auch eine Anordnung mehrerer Rotoren, wie sie bei Drohnen üblich sind, beispielsweise nach Art eines Quadkopters. Derartige Flugobjekte mit mehreren Rotoren lassen sich leicht und präzise steuern. Insbesondere ermöglichen sie Bewegungen in alle Richtungen.

Die beiden Kameras sind als Fisheye-Kamera ausgebildet, das heißt sie weisen ein Fisheye-Objektiv auf, welches einen Blickwinkel von mindestens 180° bietet. Mit einer solchen Kamera kann somit die Hälfte eines 360°- Bildes erfasst werden. Wenn die beiden genannten Blickrichtungen um 180° voneinander abgewandt sind, das heißt die zentralen optischen Achsen in beiden Blickrichtungen einander um 180° abgewandt sind, kann somit durch die Bilder in diesen zwei Blickrichtungen ein 360°-Bild erfasst werden.

Gemäß der Erfindung haben die zwei Kameras entgegengesetzte Blickrichtungen. Wenn diese beiden Kameras jeweils als eine Fisheye-Kamera ausgebildet sind, können sie somit gemeinsam ein 360°-Bild erfassen. Die beiden sind in einem gemeinsamen Inspektionsgerät angeordnet, das heißt sie werden gemeinsam mit einem Inspektionsgerät durch das Kanalbauwerk bewegt, wobei vorzugsweise eine Kamera in der Bewegungsrichtung nach vorne und die zweite Kamera in der Bewegungsrichtung nach hinten schaut.

Besonders bevorzugt sind die zumindest zwei Kameras voneinander beabstandet und weiter bevorzugt an entgegengesetzten Enden eines Inspektionsgerätes angeordnet. Das Inspektionsgerät kann beispielsweise einen Antrieb mit Vortriebselementen wie Rotoren und/oder elektronische Bauteile zur Steuerung und Datenübertragung aufweisen. Die beiden Kameras haben besonders bevorzugt einen definierten vorbekannten Abstand zueinander, welcher bei der 3D-Rekonstruktion zum Erzeugen eines maßstabsgetreuen 3D-Bildmodells Berücksichtigung finden kann. Der definierte Abstand ermöglicht eine korrekte Skalierung des 3D-Modells unter Zugrundelegung dieses Abstandes. Wenn die beiden Kameras an einem gemeinsamen Inspektionsgerät definiert zueinander angeordnet sind, kann darüber hinaus sichergestellt werden, dass bei der Bewegung des Inspektionsgerätes beide Kameras stets in zueinander entgegengesetzten Blickrichtungen ausgerichtet bleiben, sodass idealerweise, wie vorangehend beschrieben, durch zwei Fisheye-Kameras stets ein 360°-Bild, das heißt zwei 180°-Bilder erfasst werden können.

Die Steuereinrichtung ist bevorzugt derart ausgebildet, dass sie die zumindest zwei oder mehr Kameras, derart steuert, dass während einer Bewegung des Inspektionsgerätes in zeitlichen Intervallen jeweils ein Bild aufgenommen wird, bevorzugt jeweils ein Bild in der ersten Blickrichtung und ein Bild in der zweiten Blickrichtung aufgenommen wird. Beispielsweise ist es möglich, dass während der Bewegung in vorbestimmten Abständen, beispielsweise alle fünf Zentimeter ein Bild aufgenommen wird. Alternativ wäre es denkbar, beispielsweise jede Sekunde ein Bild aufzunehmen, woraus sich bei einer konstanten Bewegungsgeschwindigkeit dann auch regelmäßige räumliche Abstände ergeben. Es wäre auch möglich, ein Video aufzunehmen, welches wiederum eine Vielzahl von Einzelbildern umfasst. Für die nachfolgende Bildverarbeitung ist es vorteilhaft, wenn beim Aufnehmen der Bilder von der Steuereinrichtung gemeinsam mit den Bilddaten Zeitstempel und/oder Positionsdaten bzw. Lageinformationen des Inspektionsgerätes gespeichert werden.

Weiter bevorzugt ist die Steuereinrichtung derart ausgebildet, dass sie die zumindest zwei Kameras veranlasst, zeitgleich jeweils ein Bild aufzunehmen. Dies ist besonders vorteilhaft, wenn die beiden Kameras in einem definierten Abstand an demselben Inspektionsgerät angeordnet sind. Auf diese Weise wird erreicht, dass stets zwei Bilder zum selben Zeitpunkt aufgenommen werden, sodass für diese beiden Bilder die beiden Kameras einen definierten vorbestimmten Abstand zueinander haben. Dies ermöglicht, wie unten näher dargelegt werden wird, eine Skalierung des Bildmodells auf Grundlage dieses vorbestimmten Abstandes.

Gemäß einer weiteren möglichen Ausgestaltung der Erfindung weist das Inspektionsgerät und/oder weist die Bildverarbeitungseinrichtung ein Positionserfassungssystem auf, wobei das Positionserfassungssystem vorzugsweise derart ausgebildet ist, dass es die Position des Inspektionsgerätes, und insbesondere die Position der Kameras, und von diesen zurückgelegten Wege anhand der von der zumindest einen Kamera aufgenommenen Bilder ermittelt. Das Positionserfassungssystem kann somit Positions- und/oder Lageänderungen erfassen. Dazu können einzelne Bildpunkte oder Bildinformationen, beispielsweise charakteristische Bildpunkte betrachtet werden und gegebenenfalls als korrespondierende Bildinformationen in verschiedenen Bildern wieder aufgefunden werden.

Bevorzugt ist das Positionserfassungssystem derart ausgebildet, dass es Positionen und Wege in einem von der Bildverarbeitungseinrichtung erstellten 3D-Bildmodell ermittelt. Dies hat den Vorteil, dass auf zusätzliche Lage- und Positionssensoren idealerweise verzichtet werden kann. Dies ist insbesondere deshalb zweckmäßig, da in geschlossenen Schächten oder Kanalrohren die üblichen Navigationssysteme, welche beispielsweise bei Drohnen zur Anwendung kommen (z.B. GPS), nur eingeschränkt oder gar nicht funktionieren.

Die zumindest eine Bildverarbeitungseinrichtung kann in einer speziellen Ausführungsform zumindest teilweise in das zumindest eine Inspektionsgerät integriert sein. Dies ist vorteilhaft, um eine kontinuierliche Bildverarbeitung, das heißt eine Bildverarbeitung in quasi Echtzeit durchführen zu können.

Gemäß einer weiteren möglichen Ausgestaltung kann das zumindest eine Inspektionsgerät zumindest einen Bewegungs- und/oder Lagesensor aufweisen und die Steuereinrichtung kann derart ausgebildet sein, dass zum Zeitpunkt einer Bildaufnahme durch die Kamera erfasste Messwerte eines solchen Bewegungs- und/oder Lagesensors gemeinsam mit den aufgenommenen Bildern gespeichert werden und von der Bildverarbeitungseinrichtung zum Erzeugen des 3D-Bildmodells berücksichtigt werden. Das heißt, bei der Erzeugung des 3D-Bildmodells kann berücksichtigt werden, an welcher Stelle bzw. in welcher räumlichen Lage der Kamera das Bild aufgenommen worden ist.

Gemäß einer weiteren möglichen Ausgestaltung der Erfindung weist die Bildverarbeitungseinrichtung eine Strukturerkennungsfunktion auf, welche derart ausgebildet ist, dass sie in den aufgenommenen Bildern korrespondierende Bildpunkte oder Bildinhalte erkennt. Ferner ist die Bildverarbeitungseinrichtung bei dieser Ausführungsform derart ausgebildet, dass sie die Bilder anhand der erkannten Bildpunkte oder Bildinhalte zu einem 3D-Bildmodell zusammenfügt. Das heißt, von der Bildverarbeitungseinrichtung werden korrespondierende Bildpunkte bzw. Bildinformationen in mehreren aufgenommenen Bildern erkannt und die Bilder entsprechend dieser Information zusammengefügt. Zur Modellerzeugung, d.h. der Erzeugung eines 3D-Modells können verschiedene, auch Kl-gestützte Verfahren zum Einsatz kommen. Beispielsweise könnte ein "structure from motion" Verfahren oder SLAM-Verfahren (Simultaneous Localization and Mapping) Verwendung finden.

Gemäß einer weiteren möglichen Ausführungsform der Erfindung sind die zwei Kameras in einem definierten Abstand zueinander angeordnet und weisen entgegengesetzte Blickrichtungen, z.B. nach vorne und hinten oder nach oben und unten auf. Die Bildauswertungseinrichtung ist dabei so ausgebildet, dass sie das 3D-Bildmodell auf Grundlage dieses definierten Abstandes zwischen den beiden Kameras skaliert.

Um in diesem virtuellen 3D-Bildmodell Abstände und Maße richtig bestimmen zu können, ist es erforderlich, dass das Bildmodell richtig skaliert wird. Hierzu ist eine Referenzstrecke erforderlich, um auf Grundlage dieses Referenzmaßes das Gesamtmodell entsprechend skalieren zu können. Vorzugsweise wird als ein solches Referenzmaß bzw. eine solche Referenzstrecke der vorbestimmte Abstand zwischen den zwei Kameras genutzt. Der vorbestimmte Kameraabstand ergibt sich aus der Konstruktion des Inspektionsgerätes und kann sehr genau vordimensioniert und ggf. auch sehr genau vermessen werden. Dieser vorbekannte Kameraabstand kann dann bei der 3D-Rekonstruktion, bei welcher das virtuelle dreidimensionale Bildmodell erzeugt wird, der Skalierung zugrunde gelegt werden, d.h. alle geometrischen Beziehungen in dem Modell können auf Grundlage dieses vorbekannten Abstandes skaliert und somit genau bestimmt werden. Auf diese Weise kann auf zusätzliche Messsysteme, welche das Kanalbauwerk zusätzlich zur Aufnahme der Bilder vermessen, verzichtet werden oder es kann die Genauigkeit solcher Messsysteme durch die zusätzliche Skalierung der Bildinformationen auf Grundlage des vorbekannten Kameraabstandes erhöht werden.

Für die Rekonstruktion des 3D-Bildmodelles werden vorzugsweise in den aufgenommenen Bildern korrespondierende Bildpunkte oder Bildinhalte erkannt bzw. erfasst und die einzelnen Bilder, welche zuvor von den beiden Kameras in den zeitlichen Intervallen aufgenommen wurden, werden anhand der erkannten und in mehreren Bildern korrespondierenden Bildpunkte oder Bildinhalte zu einem 3D-Bildmodell zusammengefügt. Die Bildinhalte bzw. Bildpunkte können charakteristische Bildpunkte bzw. Bildinhalte sein, welche z.B. Kanten, sich aus der Struktur einer Rohrwandung ergebenden Bildinhalte oder sonstige Objekte im Bild sein können. Es sind Verfahren der Bildauswertung bekannt, mit welchen solche charakteristischen oder markanten Bildinhalte bzw. Bildpunkte erkannt und wiedererkannt werden können, sodass sie in verschiedenen Bildern aufgefunden werden können und die Bilder dann basierend auf diesen korrespondierenden Punkten, welche sich in mehreren Bildern finden, zu einem dreidimensionalen Modell zusammengesetzt werden können. Die geometrischen Beziehungen zwischen einzelnen Bildpunkten oder Bildobjekten definieren dabei die dreidimensionale Struktur bzw. das dreidimensionale Modell des Kanalbauwerkes. Diese geometrischen Beziehungen werden auf Grundlage des vorbekannten Abstandes der zwei Kameras skaliert, sodass aus diesen geometrischen Beziehungen absolute Maße aus dem Bild abgeleitet werden können.

Die Skalierung kann vorzugsweise in der Weise erfolgen, dass in den Bildern eine Wolke von Bildpunkten mit den relativen geometrischen Beziehungen zwischen den Bildpunkten ermittelt wird. Für diese Wolke wird zunächst ein willkürlicher oder Ausgangs-Maßstab angesetzt und auf Grundlage dieses Maßstabes der Abstand zwischen den beiden Kameras berechnet. Dieser berechnete Abstand wird anschließend mit dem vorbekannten Abstand verglichen und im Anschluss wird die Wolke von Bildpunkten so skaliert, dass der rechnerisch ermittelte Wert für den Abstand der Kameras dem tatsächlichen Wert, d.h. dem vorbekannten Abstand der Kameras entspricht. Auf diese Weise können dann absolute Maße für die geometrischen Beziehungen zwischen einzelnen Bildobjekten oder Bildpunkten ermittelt werden und das gesamte 3D-Bildmodellen maßstabsgetreu skaliert werden.

In einer bevorzugten Ausgestaltung der Erfindung ermöglicht die beschriebene Skalierung des 3D-Bildmodelles, eine Bestimmung des bei der Bewegung des Inspektionsgerätes zurückgelegten Weges auf Grundlage des skalierten 3D-Bildmodells. Hierzu kann besonders bevorzugt die Bildauswertung bzw. Bildrekonstruktion direkt während der Bewegung des Inspektionsgerätes, vorzugsweise im Wesentlichen in Echtzeit erfolgen, sodass das 3D-Bildmodell während der Bewegung zur Orientierung und Positionierung des Inspektionsgerätes genutzt werden kann. Die Bildauswertung kann dabei in einem hierfür geeigneten Computersystem direkt in dem Inspektionsgerät erfolgen und/oder extern in einem mit dem Inspektionsgerät verbundenen Computersystem, wobei dies über eine Kabelverbindung oder auch eine drahtlose Verbindung, beispielsweise Funkverbindung erfolgen kann.

Nachfolgend wird die Erfindung beispielhaft anhand der beigefügten Figuren beschrieben. In diesen zeigt:
- Figur 1: schematisch ein Kanalinspektionssystem gemäß der Erfindung beim Einsatz in einem Kanalrohr, und
- Figuren 2 und 3: schematisch die Skalierung eines 3D-Bildmodells.

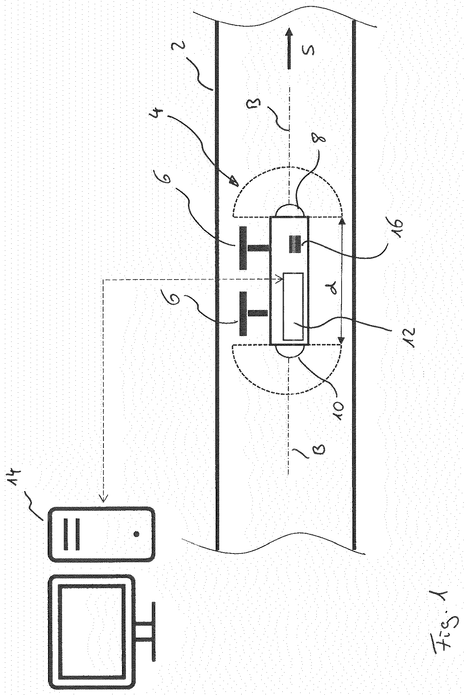

Figur 1 zeigt schematisch ein Kanalrohr 2 als ein Beispiel für ein Kanalbauwerk mit einem darin angeordneten Inspektionsgerät 4. Das Inspektionsgerät 4 ist nach Art einer Drohne mit Rotoren 6 zum Schweben und zur Fortbewegung ausgebildet. Die Rotoren 6 dienen sowohl als Auftriebseinrichtung als auch als Vortriebseinrichtung. Das Inspektionsgerät 4 könnte jedoch auch in anderer Weise fliegend bzw. schwebend ausgebildet sein, z.B. mit getrennten Vortriebs- und Auftriebseinrichtungen.

Das Inspektionsgerät 4 weist an seinen beiden entgegengesetzten Enden jeweils eine Kamera 8, 10 auf. Die optischen Achsen B, d.h. die Mitteilachsen der Blickrichtungen der beiden Kameras 8 und 10 sind in dieser Anordnung gleichgerichtet, sodass die Kameras 8 und 10 zwei einander um 180 Grad abgewandte Blickrichtungen aufweisen. Die Objektive der Kameras 8 und 10 sind jeweils als Fisheye-Objektive mit einem Bildwinkel von mindestens 180 Grad ausgebildet, sodass beide Kameras 8 und 10 zusammen ein 360 Grad-Bild erfassen. Das Inspektionsgerät 4 wird über die Rotoren 6 in der Vorschubrichtung S durch das Kanalrohr 2 bewegt. Dabei sind die optischen Achsen B in Richtung der Vorschubrichtung S gerichtet, sodass die Kamera 8 nach vorne und die Kamera 10 nach hinten schaut. Aufgrund der Baulänge des Inspektionsgerätes 4 sind die beiden Kameras 8 und 10 um das Maß d beabstandet.

Das Inspektionsgerät 4 weist eine Steuereinrichtung 12 auf, welche die Bewegung entlang der Vorschubrichtung S steuern kann. Insbesondere steuert die Steuereinrichtung 12 jedoch die Kameras 8 und 10 in der Weise, dass diese jeweils zeitgleich in zeitlichen Intervallen Bilder aufnehmen. Die zeitlichen Intervalle sind vorzugsweise regelmäßig, sodass bei einer konstanten Vorschubbewegung in der Vorschubrichtung S in regelmäßigen Abständen von beiden Kameras Bilder aufgenommen werden, beispielsweise alle 2 oder 5 cm. Da die Kameras 8 und 10 jeweils gleichzeitig ein Bild aufnehmen, existieren immer zwei Bilder, bei welchen sich die Kameras in dem definierten Abstand d befunden haben. Dies kann bei der Skalierung ausgenutzt werden.

Die von den Kameras 8 und 10 aufgenommenen Bildern werden an ein Computersystem 14 übertragen, welches eine Bildauswerte- bzw. Bildverarbeitungseinrichtung aufweist. Die Datenübertragung kann in Echtzeit direkt nach der Aufnahme erfolgen. Alternativ können die Bilddaten in der Inspektionsvorrichtung 4 in einem geeigneten Speicher gespeichert werden und nach der Durchfahrt durch das Kanalrohr 2 ausgelesen und an das Computersystem 14 mit der Bildverarbeitungseinrichtung übertragen werden. Die Bildverarbeitungseinrichtung erzeugt aus der Vielzahl der von den Kameras 8 und 10 aufgenommenen Bildern ein 3D-Bildmodell bzw. 3D-Modell in einem üblichen 3D-Rekonstruktionsverfahren. Dazu kann eine Strukturerkennungsfunktion in der Bildverarbeitungseinrichtung vorgesehen sein, welche in den aufgenommenen Bildern korrespondierende Bildpunkte bzw. Bildinformationen erkennt, um einzelne Bilder oder 3D-Modelle anhand korrespondierender Bildpunkte zu einem einheitlichen 3D-Modell zusammenzuführen. Die 3D-Rekonstruktion erfolgt allein auf Grundlage der aufgenommen Bildinformationen, so dass ein tatsächliches dreidimensionales Modell des Kanalbauwerkes, d.h. der das Kanalbauwerk begrenzenden Innenwandung erzeugt wird, ohne dass eine idealisierte Form des Bauwerkes zugrunde gelegt wird. So kann aus den Bildinformationen zum Beispiel die tatsächliche Form bzw. Gestalt eines Kanalrohres ermittelt werden, was es ermöglicht, Veränderungen bzw. Verformungen zu erkennen.

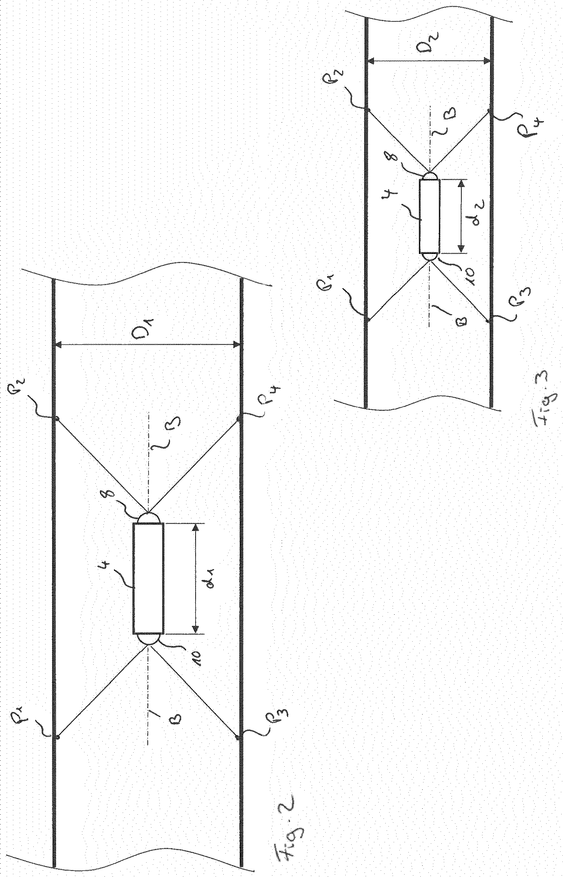

Von der Bildverarbeitungseinrichtung wird eine Punktewolke aus Bildpunkten gebildet, welche in Figuren 2 und 3 schematisch als die Bildpunkte P₁, P₂, P₃ und P₄ gezeigt sind. Diese Bildpunkte haben eine definierte geometrische Lage, insbesondere eine definierte geometrische Beziehung zueinander. D.h. die relativen Abstände zueinander ergeben sich aus der 3D-Rekonstruktion. Zur Bestimmung der absoluten Maße ist es jedoch erforderlich, einen Maßstab zur richtigen Skalierung zu verwenden. In diesem Beispiel wird hierzu die bekannte Länge d des Inspektionsgerätes 4, d.h. der bekannte Abstand d zwischen den Kameras 8 und 10 herangezogen. Die Skalierung erfolgt in der Weise, dass für die Punktewolke, wie in Figur 2 gezeigt, zunächst ein Ausgangs-Maßstab, welches ein vorbestimmter Maßstab oder willkürlicher Maßstab sein kann, herangezogen wird. Beispielsweise wird für den Rohrdurchmesser D zunächst einmal ein beliebiges Maß, hier beispielsweise D₁=50 cm angenommen. Auf Grundlage der definierten relativen Beziehungen zueinander ergibt sich aus diesem Maß ein rechnerischer Abstand d₁ für die beiden Kameras 8 und 10, welcher sich hier beispielweise als d₁=10 cm ergibt. Wenn nun bekannt ist, dass der tatsächliche Abstand d=5 cm ist, kann das gesamte 3D-Bildmodell entsprechend skaliert werden, d.h. in diesem Beispiel um die Hälfte verkleinert werden, sodass der rechnerisch ermittelte Abstand d₂ den tatsächlichen Abstand d, in diesem Beispiel beispielsweise d₂=5 cm entspricht. Auf Grundlage der vorgegebenen bzw. in der 3D-Rekosntruktion ermittelten geometrischen Beziehungen ergibt sich dann entsprechend der tatsächliche Rohrdurchmesser D₂ zu 25 cm. D.h. erfindungsgemäß wird idealerweise als das einzige vorbekannte korrekte Maß der Abstand d zwischen den beiden Kameras 8 und 10 herangezogen und auf Grundlage dieser bekannten Größen das gesamte ermittelte 3D-Bildmodell skaliert, sodass aus diesem dann alle anderen Maße, beispielsweise Positionen von erfassten Beschädigungen, Maße von Hausanschlüssen oder Muffen ermittelt bzw. abgeleitet werden können.

Wenn die Bilder für das 3D-Bildmodell nicht von zwei in einem vorbestimmten Abstand d miteinander verbundenen Kameras aufgenommen werden, kann zur Skalierung der in dem 3D-Bildmodell gefundenen geometrischen Beziehungen auch ein anderer Maßstab verwendet werden. So könnte beispielsweise in dem Kanalbauwerk, hier beispielsweise in dem Kanalrohr 2 eine Strecke auf anderer Weise gemessen werden. Ferner könnten Vermessungssysteme zur Durchmesserbestimmung o.ä. in das Inspektionsgerät integriert sein, um auf diesem Wege exakte Maße zu ermitteln, auf deren Grundlage das Bildmodell skaliert werden kann.

Zur Position- und Lagebestimmung des Inspektionsgerätes 4 könnten weitere Sensoren verwendet werden, so beispielsweise ein Lagesensor 16, welcher die Winkellage, insbesondere die Winkellage der optischen Achsen B im Raum erfasst. Die von dem Lagesensor 16 erfassten Messwerte können gemeinsam mit den Bildern abgespeichert werden, sodass die Winkellage der optischen Achsen B bei der Aufnahme der Bilder später bei der 3D-Rekonstruktion berücksichtigt werden kann.

### Bezugszeichenliste

- 2: Kanalrohr
- 4: Inspektionsgerät
- 6: Rotoren
- 8, 10: Kameras
- 12: Steuereinrichtung
- 14: Computersystem, Bildverarbeitungseinrichtung
- 16: Lagesensor
- S: Vorschubrichtungen
- B: Blickrichtungen
- d, d₁, d₂: Abstände der Kameras 8, 10
- D₁, D₂: Rohrdurchmesser
- P₁, P₂, P₃, P₄: Bildpunkte

## Patentansprüche

1. Kanalinspektionssystem mit zumindest einem flugfähigen Inspektionsgerät (4), welches dafür vorgesehen ist, durch ein Kanalbauwerk zu dessen Inspektion zu fliegen und zwei Kameras (8, 10) und eine Steuereinrichtung (12) aufweist, sowie mit einer Bildverarbeitungseinrichtung (14),
**dadurch gekennzeichnet, dass**
die beiden Kameras (8, 10) Fisheye-Kameras sind und entgegengesetzt gerichteten Blickrichtungen aufweisen,
die beiden Kameras (8, 10) und die Steuereinrichtung (12) zum Erzeugen von 360°-Bildern in der Weise ausgebildet sind, dass mit den Kameras (8, 10) Bilder in einer ersten Blickrichtung und Bilder in zumindest einer zweiten Blickrichtung aufgenommen werden, und die Bildverarbeitungseinrichtung (14) derart ausgebildet ist, dass sie die in den zwei Blickrichtungen aufgenommen Bilder in einer 3D-Rekonstruktion zu einem 3D-Bildmodell zusammenfügt.

2. Kanalinspektionssystem, **dadurch gekennzeichnet, dass** das zumindest eine flugfähige Inspektionsgerät (4) zumindest eine Auftriebseinrichtung (6) und zumindest eine Vortriebseinrichtung (6) aufweist, von welchen zumindest eine Vortriebseinrichtung (6) bevorzugt als Rotor ausgebildet ist.

3. Kanalinspektionssystem nach Anspruch 1 oder 2, **dadurch gekennzeichnet, dass** das zumindest eine flugfähige Inspektionsgerät (4) zumindest eine als Rotor (6) ausgebildete kombinierte Auf- und Vortriebseinrichtung aufweist.

4. Kanalinspektionssystem nach einem der vorangehenden Ansprüche, **dadurch gekennzeichnet, dass** die zwei Kameras (8, 10) voneinander beabstandet und vorzugsweise an entgegengesetzten Enden eines Inspektionsgerätes (4) angeordnet sind.

5. Kanalinspektionssystem nach einem der vorangehenden Ansprüche, **dadurch gekennzeichnet, dass** die Steuereinrichtung (12) derart ausgebildet ist, dass sie die Kameras (8, 10) derart steuert, dass während einer Bewegung des Inspektionsgerätes (4) in zeitlichen Intervallen jeweils ein Bild in der ersten Blickrichtung und ein Bild in der zweiten Blickrichtung aufgenommen werden.

6. Kanalinspektionssystem nach einem der vorangehenden Ansprüche, **dadurch gekennzeichnet, dass** die Steuereinrichtung (12) derart ausgebildet ist, dass sie die zumindest zwei Kameras (8, 10) veranlasst, zeitgleich jeweils ein Bild aufzunehmen.

7. Kanalinspektionssystem nach einem der vorangehenden Ansprüche, **dadurch gekennzeichnet, dass** das Inspektionsgerät (4) und/oder die Bildverarbeitungseinrichtung (14) ein Positionserfassungssystem beinhaltet, wobei das Positionserfassungssystem vorzugsweise derart ausgebildet ist, dass es die Position des Inspektionsgerätes (4) und von diesem zurückgelegte Wege anhand der von der zumindest einen Kamera (8,10) aufgenommen Bilder erfasst.

8. Kanalinspektionssystem nach Anspruch 7, **dadurch gekennzeichnet, dass** das Positionserfassungssystem derart ausgebildet ist, dass es Positionen und Wege in einem von der Bildverarbeitungseinrichtung (14) erstellten 3D-Bildmodell ermittelt.

9. Kanalinspektionssystem nach einem der vorangehenden Ansprüche, **dadurch gekennzeichnet, dass** die Bildverarbeitungseinrichtung (14) zumindest teilweise in das zumindest eine Inspektionsgerät (4) integriert ist.

10. Kanalinspektionssystem nach einem der vorangehenden Ansprüchen, **dadurch gekennzeichnet, dass** das zumindest eine Inspektionsgerät (4) zumindest einen Bewegungs- und/oder Lagesensor (16) aufweist und die Steuereinrichtung (12) derart ausgebildet ist, dass zum Zeitpunkt einer Bildaufnahme durch die Kameras (8, 10) erfasste Messwerte eines solchen Bewegungs- und/oder Lagesensors (16) gemeinsam mit den aufgenommen Bildern gespeichert werden und von der Bildverarbeitungseinrichtung (14) beim Erzeugen des 3D-Bildmodells berücksichtigt werden.

11. Kanalinspektionsgerät nach einem der vorangehenden Ansprüche, **dadurch gekennzeichnet, dass** die Bildverarbeitungseinrichtung (14) eine Strukturerkennungsfunktion aufweist, welche derart ausgebildet ist, dass sie in den aufgenommenen Bildern korrespondierende Bildpunkte (P₁, P₂, P₃, P₄) oder Bildinhalte erkennt, und derart ausgebildet ist, dass sie die Bilder anhand der erkannten Bildpunkte (P₁, P₂, P₃, P₄) oder Bildinhalte zu einem 3D-Bildmodell zusammenfügt.

12. Kanalinspektionssystem nach einem der vorangehenden Ansprüche, **dadurch gekennzeichnet, dass** das die zwei Kameras (8, 10) in einem definierten Abstand (d) zueinander angeordnet sind und die Bildausverarbeitungseinrichtung (14) derart ausgebildet ist, dass sie das 3D-Bildmodell auf Grundlage dieses definierten Abstandes (d) zwischen den zwei Kameras (8, 10) skaliert.

## Claims

1. Channel inspection system comprising at least one inspection device (4) capable of flight, which is provided to fly through a channel structure to inspect said structure and two cameras (8, 10) and a control device (12), as well as comprising an image processing device (14), **characterized in that** the two cameras (8, 10) are fisheye cameras and have oppositely directed viewing directions, the two cameras (8, 10) and the control device (12)
are configured for generating 360° images in such a manner that images in a first viewing direction and images in at least a second viewing direction are captured by the cameras (8, 10), and the image processing device (14) is configured in such a manner that it combines the images captured in the two viewing directions in a 3D reconstruction to form a 3D image model.

2. Channel inspection system, **characterized in that** the at least one inspection device (4) capable of flight has at least one lifting device (6) and at least one propulsion device (6), of which at least one propulsion device (6) is preferably configured as a rotor.

3. Channel inspection system according to Claim 1 or 2, **characterized in that** the at least one inspection device (4) capable of flight has at least one combined lifting and propulsion device configured as a rotor (6).

4. Channel inspection system according to one of the preceding claims, **characterized in that** the two cameras (8, 10) are spaced apart from one another and are preferably arranged at opposite ends of an inspection device (4).

5. Channel inspection system according to one of the preceding claims, characterized the control device (12) is configured in such a manner that it controls the cameras (8, 10) in such a manner that during a movement of the inspection device (4) at temporal intervals an image is captured in the first viewing direction and an image is captured in the second viewing direction.

6. Channel inspection system according to one of the preceding claims, **characterized in that** the control device (12) is configured in such a manner that it causes the at least two cameras (8, 10) to each capture one image simultaneously.

7. Channel inspection system according to one of the preceding claims, **characterized in that** the inspection device (4) and/or the image processing device (14) includes a position detection system, wherein the position detection system is preferably configured in such a manner that it detects the position of the inspection device (4) and the paths travelled by it on the basis of the images captured by the at least one camera (8, 10).

8. Channel inspection system according to Claim 7, **characterized in that** the position detection system is configured in such a manner that it determines positions and paths in a 3D image model created by the image processing device (14).

9. Channel inspection system according to one of the preceding claims, **characterized in that** the image processing device (14) is at least partially integrated into the at least one inspection device (4).

10. Channel inspection system according to one of the preceding claims, **characterized in that** the at least one inspection device (4) has at least one motion and/or position sensor (16) and the control device (12) is configured in such a manner that measured values of such a motion and/or position sensor (16) captured at the time of image acquisition by the cameras (8, 10) are stored together with the captured images and are taken into account by the image processing device (14) when generating the 3D image model.

11. Channel inspection device according to one of the preceding claims, **characterized in that** the image processing device (14) has a structure recognition function which is configured in such a manner that it recognizes corresponding image points (P1, P2, P3, P4) or image content in the captured images, and is configured in such a manner that it combines the images into a 3D image model based on the recognized image points (P1, P2, P3, P4) or image content.

12. Channel inspection system according to one of the preceding claims, **characterized in that** the two cameras (8, 10) are arranged at a defined distance (d) from each other and the image processing device (14) is configured in such a manner that it scales the 3D image model on the basis of this defined distance (d) between the two cameras (8, 10).

## Revendications

1. Système d'inspection de canaux comprenant un appareil d'inspection capable de voler (4), lequel est destiné à voler à travers une structure de canaux pour l'inspecter et présente deux caméras (8, 10) ainsi qu'un dispositif de commande (12), et comprenant un dispositif de traitement d'images (14),
**caractérisé en ce que**
les deux caméras (8, 10) sont des caméras « fish eye » et présentent des direction de visée orientées de façon opposée, les deux caméras (8, 10) et le dispositif de commande (12) sont conçus pour produire des images à 360° de telle façon des images sont capturées dans une première direction de visée et dans au moins une deuxième direction de visée à l'aide des caméras (8, 10), et le dispositif de traitement d'images (14) est conçu de manière à fusionner les images capturées dans les deux directions de visée en un modèle d'image 3D dans une reconstruction 3D.

2. Système d'inspection de canaux, **caractérisé en ce que** l'au moins un appareil d'inspection capable de voler (4) présente au moins un dispositif de portance (6) et au moins un dispositif de propulsion (6), parmi lesquels au moins un dispositif de propulsion (6) est conçu de préférence comme un rotor.

3. Système d'inspection de canaux selon la revendication 1 ou 2, **caractérisé en ce que** l'au moins un appareil d'inspection capable de voler (4) présente au moins un dispositif de portance et de propulsion combiné conçu comme un rotor (6).

4. Système d'inspection de canaux selon l'une des revendications précédentes, **caractérisé en ce que** les deux caméras (8, 10) sont espacées l'une de l'autre et disposées de préférence à des extrémités opposées d'un appareil d'inspection (4).

5. Système d'inspection de canaux selon l'une des revendications précédentes, **caractérisé en ce que** le dispositif de commande (12) est conçu de manière à commander les caméras (8, 10) de telle façon que pendant un déplacement de l'appareil d'inspection (4), une image est capturée dans la première direction de visée et une image est capturée dans la deuxième direction de visée à des intervalles de temps.

6. Système d'inspection de canaux selon l'une des revendications précédentes, **caractérisé en ce que** le dispositif de commande (12) est conçu de manière à amener les au moins deux caméras (8, 10) à capturer respectivement un image simultanément.

7. Système d'inspection de canaux selon l'une des revendications précédentes, **caractérisé en ce que** l'appareil d'inspection (4) et/ou le dispositif de traitement d'images (14) contient un système de détection de position, dans lequel le système de détection de position est conçu de préférence de manière à détecter la position de l'appareil d'inspection (4) et des trajets parcourus par celui-ci à l'aide des images capturées par l'au moins une caméra (8, 10).

8. Système d'inspection de canaux selon la revendication 7, **caractérisé en ce que** le système de détection de position est conçu de manière à déterminer des positions et des trajets dans un modèle d'image 3D établi par le dispositif de traitement d'images (14).

9. Système d'inspection de canaux selon l'une des revendications précédentes, **caractérisé en ce que** le dispositif de traitement d'images (14) est au moins partiellement intégré dans l'au moins un appareil d'inspection (4).

10. Système d'inspection de canaux selon l'une des revendications précédentes, **caractérisé en ce que** l'au moins un appareil d'inspection (4) présente au moins un capteur de déplacement et/ou de position (16) et le dispositif de commande (12) est conçu de telle façon qu'au moment d'une capture d'image par les caméras (8, 10), des valeurs de mesure détectées d'un tel capteur de déplacement et/ou de position (16) sont enregistrées conjointement avec les images capturées et prises en compte par le dispositif de traitement d'images (14) lors de la production du modèle d'image 3D.

11. Appareil d'inspection de canaux selon l'une des revendications précédentes, **caractérisé en ce que** le dispositif de traitement d'images (14) présente une fonction de reconnaissance de structure, laquelle est conçue de manière à reconnaître, dans les images capturées, des pixels (P1, P2, P3, P4) ou contenus d'image correspondants, et conçue de manière à fusionner les images en un modèle d'image 3D à l'aide des pixels (P1, P2, P3, P4) ou contenus d'image reconnus.

12. Système d'inspection de canaux selon l'une des revendications précédentes, **caractérisé en ce que** les deux caméras (8, 10) sont disposées à une distance définie (d) l'une par rapport à l'autre et le dispositif de traitement d'images (14) est conçu de manière à redimensionner le modèle d'image 3D sur la base de cette distance définie (d) entre les deux caméras (8, 10).
